(19) Europäisches Patentamt
European Patent Office
Office européen des brevets

(11) **EP 2 037 647 A2**

(12) **EUROPEAN PATENT APPLICATION**

(43) Date of publication:
**18.03.2009 Bulletin 2009/12**

(51) Int Cl.:
***H04L 25/06*** *(2006.01)*

(21) Application number: **08016220.9**

(22) Date of filing: **15.09.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **13.09.2007 US 971970 P**
            **10.09.2008 US 207721**

(71) Applicant: **Broadcom Corporation
Irvine 92617 (US)**

(72) Inventors:
• **Ariyavisitakul, Sirikiat
Alpharetta, GA 30022-7104 (US)**
• **Ojard, Eric
San Fransisco, CA 94123 (US)**

(74) Representative: **Jehle, Volker Armin et al
Bosch Jehle Patentanwaltsgesellschaft mbH
Flüggenstrasse 13
80639 München (DE)**

(54) **Method and system for approximate maximum likelihood detection in MIMO receiver**

(57)    Aspects of a method and system for approximate maximum likelihood (ML) detection in a multiple input multiple output (MIMO) receiver may comprise computing soft decision values for bits that may be decoded from a received signal vector by utilizing approximate ML detection. The soft decision values may be computed for at least a portion bits carried within a received signal vector by decomposing a candidate constellation vector into segments, with each dimension representing a spatial stream signal. After decomposition, soft decision values for at least a portion of the bits may be computed by selecting values in a search dimension and computing values in a plurality of slice dimensions. Values within the search dimension may be determined by selecting constellation points within a constellation map for the search dimension. Values within each slice dimension may be computed for each selected constellation point.

**FIG. 1A**

EP 2 037 647 A2

**Description**

CROSS-REFERENCE TO RELATED APPLICATIONS/INCORPORATION BY REFERENCE

This application makes reference, claims priority to, and claims the benefit of United States Application Serial No. 60/971,970 filed September 13, 2007, which is hereby incorporated herein by reference in its entirety.

FIELD OF THE INVENTION

Certain embodiments of the invention relate to wireless communication. More specifically, certain embodiments of the invention relate to a method and system for approximate maximum likelihood (ML) detection in a multiple input multiple output (MIMO) receiver.

BACKGROUND OF THE INVENTION

Multiple input multiple output (MIMO) systems are wireless communications systems that may transmit signals utilizing a plurality of transmitting antennas, and/or receive signals utilizing a plurality of receiving antennas. Communications between MIMO systems may be based on specifications from the Institute of Electrical and Electronics Engineers (IEEE). A MIMO system that receives a signal Y may compute a channel estimate matrix, H, based on the received signal. The signal may comprise information generated from a plurality of information sources. Each such information source may be referred to as a spatial stream.
A MIMO transmitter may combine spatial streams to generate one or more RF chains. Alternatively, each RF chain may correspond to a distinct spatial stream. A group of RF chains may be concurrently transmitted from the transmitting MIMO system via a plurality of transmitting antennas. The signals concurrently transmitted by the plurality of transmitting antennas, referred to as spatial stream signals, may be represented as a transmitted signal vector X. The spatial stream signals $x_i$ (where i is a spatial stream index variable), which comprise the signal vector X, may propagate across a communication medium en route from the transmitting MIMO system to receiving MIMO system. The signal transfer characteristics of the communication medium may be represented by a channel matrix, H. A receiving MIMO system may utilize a plurality of receiving antennas when receiving the signals. The signals concurrently received by the plurality of receiving antennas may be represented as a received signal vector, R.
The MIMO communication system may be represented mathematically as follows:

$$R = H\,X + N \hspace{4cm} [1]$$

where R represents a column vector of signals received by each of a plurality of Nrx receiving antennas: $r_1$, $r_2$,..., and $r_{Nrx}$; X represents a column vector of signals transmitted by each of a plurality of Ntx transmitting antennas: $x_1$, $x_2$,..., and $x_{Ntx}$; H represents a matrix of channel estimates comprising Nrx rows and Ntx columns; and N represents a column vector of noise received by each of the Nrx receiving antennas: $n_1$, $n_2$,..., and $n_{Nrx}$. Statistically, the noise elements, $n_i$, are typically considered to be independent and identically distributed complex Gaussian random variables.
In equation [1] each of the spatial stream signal values $x_i$ may be represented by one or more bits $b_1$, $b_2$,..., and $b_{MOD(i)}$. Each spatial stream signal value, which comprises the bits $b_1$, $b_2$,..., and $b_{MOD(i)}$, may be referred to as a "symbol". The number of bits MOD(i) in each symbol may be determined based on the modulation type utilized for generating the corresponding spatial stream signal $x_i$ at the MIMO transmitter. Each value for the transmitted signal vector, X, may be represented as comprising the collective bits from the set of concurrently transmitted symbols. The total number of bits represented in vector X is a summation of values MOD(i) for the spatial streams identified by i=1, 2,..., and Nss.
A MIMO receiver that utilizes maximum likelihood (ML) detection may compute a "soft decision" value for each bit in the received signal vector R. The set of soft decision values may by utilized by a decoder to determine decoded values for each of the bits, $b_k$, in the transmitted signal vector X.
In ML detection, the MIMO receiver may compute soft decision values by computing approximate log-likelihood ratio for each bit in the transmitted signal vector X. The soft decision values for each bit in X may be computed by computing an error magnitude squared value for each possible combination of bit values in X. Each of the candidate bit combinations may be represented as a candidate constellation vector value $\hat{X}$. An approximate log-likelihood ratio for the $k^{th}$ bit in the candidate constellation vector $\hat{X}$ is computed as follows, for example:

$$L_k = \frac{1}{\sigma^2}\left( \min_{\hat{X}|b_k=0} \left\| R - H\,\hat{X} \right\|^2 - \min_{\hat{X}|b_k=1} \left\| R - H\,\hat{X} \right\|^2 \right) \qquad [2]$$

where the term:

$$\left\| R - H\,\hat{X} \right\| \qquad [3]$$

refers to the error magnitude, which represents the magnitude of the difference between the received signal vector, R, and matrix product H×$\hat{X}$. The first term in brackets in equation [2] represents the minimum error magnitude squared when the $k^{th}$ bit in the candidate constellation vector $\hat{X}$ equals 0. The second term in brackets in equation [2] represents the minimum error magnitude squared when the $k^{th}$ bit in the candidate constellation vector $\hat{X}$ equals 1. The variable $\sigma^2$ indicates the variance of noise elements $n_i$ (shown in equation [1]).

A log-likelihood ratio (LLR), measured at the MIMO receiver, provides a measure of the probability that the value of the $k^{th}$ bit of the transmitted signal X was "0" or "1" given the received signal vector R. The LLR may be represented as shown in the following equation:

$$\mathrm{LLR} = \log\left( \frac{P\left(b_k = 1 \middle| R\right)}{P\left(b_k = 0 \middle| R\right)} \right) \qquad [4]$$

Each of the values $L_k$ in equation [2] is referred to as a "soft decision" value for bit $b_k$. and it represents an approximation of the log-likelihood ratio defined in equation [4]. Equation [2] may be represented in shorthand notion as follows:

$$L_k = \frac{1}{\sigma^2}\left( \min_{\hat{X}|b_k=0} - \min_{\hat{X}|b_k=1} \right)\left\| R - H\,\hat{X} \right\|^2 \qquad [5]$$

The soft decision values are computed for each bit $b_k$ based on the received signal vector R. The number of error magnitude squared values needed to compute a soft decision value for each bit based on the received signal vector R may be represented by the notation $N_{comp}(ML)$. In an ML detection process, the value $N_{comp}(ML)$ may therefore increase exponentially based on the number of spatial streams and the number of bits per data symbol, MOD(i), where MOD(i) identifies a modulation type utilized to generate data symbols that are transmitted within spatial stream $x_i$. $N_{comp}$ (ML) may be represented as follows:

$$N_{comp}\left(ML\right) = \prod_{i=1}^{Ntx} 2^{MOD(i)} \qquad [6]$$

In conventional ML detector systems, error magnitude squared values may be computed for each candidate constellation vector value $\hat{X}$. Since each candidate constellation vector value $\hat{X}$ comprises a set symbols from the spatial streams 1, 2,..., and Nss, the task of computing the soft decision values $L_k$ may involve selecting candidate constellation point values from a joint universe of constellation points that comprises the constellations for the individual spatial streams. The number of candidate constellation vector values $\hat{X}$ in this joint universe of constellation points is represented as shown in equation [6]. For example, where Ntx=4 and each MOD(i) =6 (which corresponds to a case in which each spatial stream signal utilizes a modulation type such as 64-QAM, for example):

$$N_{comp}\left(ML\right) = 2^6 \cdot 2^6 \cdot 2^6 \cdot 2^6 = 16,777,216 \qquad [7]$$

The level of complexity as represented by the number of computations shown in equation [6] may be too great for many real world MIMO receiver applications.

Further limitations and disadvantages of conventional and traditional approaches will become apparent to one of skill in the art, through comparison of such systems with some aspects of the present invention as set forth in the remainder of the present application with reference to the drawings.

BRIEF SUMMARY OF THE INVENTION

A method and system for approximate maximum likelihood (ML) detection in a multiple input multiple output (MIMO) receiver, substantially as shown in and/or described in connection with at least one of the figures, as set forth more completely in the claims.

According to one aspect of the invention, a system for communicating information in a wireless communication system comprises:

one or more circuits that enable concurrent reception of three (3) or more spatial stream signals via a plurality of antennas;

said one or more circuits enable determination of a plurality of candidate constellation point values for a selected one of said concurrently received three or more spatial stream signals;

said one or more circuits enable determination of a plurality of sliced constellation point values for each remaining one of said concurrently received three or more spatial stream signals based on said determined plurality of candidate constellation point values; and

said one or more circuits enable computation of soft decision values for at least a portion of a plurality of bits detected via said concurrently received three or more spatial stream signals based on said determined plurality of candidate constellation point values and said plurality of sliced constellation point values.

Advantageously, said one or more circuits enable determination of a number of said plurality of candidate constellation point values based on a modulation type utilized in connection with said selected one or said concurrently received three or more spatial stream signals.

Advantageously, each of said plurality of candidate constellation point values corresponds to a constellation point in a constellation map, said constellation map being determined based on said modulation type.

Advantageously, said one or more circuits enable determination of a number of bits for said computing of said soft decision values from said selected one of said concurrently received three or more spatial stream signals based on said modulation type.

Advantageously, said one or more circuits enable computation of a first minimum squared distance metric value for a selected one of said number of bits when a candidate value of said selected one of said number of bits is equal to zero (0), and computation of a second minimum squared distance metric value for said selected one of said number of bits when a candidate value of said selected one of said number of bits is equal to one (1).

Advantageously, said one or more circuits enable computation of a soft decision value based on said first minimum squared distance metric value and said second minimum squared distance metric value.

Advantageously, said one or more circuits enable computation of said soft decision value for each one of said determined number of bits.

Advantageously, said one or more circuits enable selection of a subsequent one of said concurrently received three or more spatial stream signals.

Advantageously, said one or more circuits enable computation of subsequent soft decision values for a subsequent at least a portion of said plurality of bits received via said concurrently received three or more spatial stream signals based on said selected subsequent one of said concurrently received three or more spatial stream signals.

Advantageously, each of said plurality of sliced constellation point values corresponds to one of said concurrently received three or more spatial stream signals.

Advantageously, said one or more circuits enable determination of said each of said plurality of sliced constellation point values based on a modulation type utilized in connection with said corresponding one of said concurrently received three or more spatial stream signals.

Advantageously, said determined each of said plurality of sliced constellation point values corresponds to a constellation point in a constellation map, said constellation map being determined based on said modulation type.

According to another aspect of the invention, a method for communicating information in a wireless communication system comprises:

> concurrently receiving three (3) or more spatial stream signals via a plurality of antennas;
> determining a plurality of candidate constellation point values for a selected one of said concurrently received three or more spatial stream signals;
> determining a plurality of sliced constellation point values for each remaining one of said concurrently received three or more spatial stream signals based on said determined plurality of candidate constellation point values; and
> computing soft decision values for at least a portion of a plurality of bits received via said concurrently received three or more spatial stream signals based on said determined plurality of candidate constellation point values and said plurality of sliced constellation point values.

Advantageously, the method comprises determining a number of said plurality of candidate constellation point values based on a modulation type utilized in connection with said selected one or said concurrently received three or more spatial stream signals.

Advantageously, each of said plurality of candidate constellation point values corresponds to a constellation point in a constellation map, said constellation map being determined based on said modulation type.

Advantageously, the method comprises determining a number of bits for said computing of said soft decision values from said selected one of said concurrently received three or more spatial stream signals based on said modulation type.

Advantageously, the method comprises computing a first minimum squared distance metric value for a selected one of said number of bits when a candidate value of said selected one of said number of bits is equal to zero (0), and computation of a second minimum squared distance metric value for said selected one of said number of bits when a candidate value of said selected one of said number of bits is equal to one (1).

Advantageously, the method comprises computing a soft decision value based on said first minimum squared distance metric value and said second minimum squared distance metric value.

Advantageously, the method comprises computing said soft decision value for each one of said determined number of bits.

Advantageously, the method comprises selecting a subsequent one of said concurrently received three or more spatial stream signals.

Advantageously, the method comprises computing subsequent soft decision values for a subsequent at least a portion of said plurality of bits received via said concurrently received three or more spatial stream signals based on said selected subsequent one of said concurrently received three or more spatial stream signals.

Advantageously, each of said plurality of sliced constellation point values corresponds to one of said concurrently received three or more spatial stream signals.

Advantageously, the method comprises determining said each of said plurality of sliced constellation point values based on a modulation type utilized in connection with said corresponding one of said concurrently received three or more spatial stream signals.

Advantageously, said determined each of said plurality of sliced constellation point values corresponds to a constellation point in a constellation map, said constellation map being determined based on said modulation type.

These and other advantages, aspects and novel features of the present invention, as well as details of an illustrated embodiment thereof, will be more fully understood from the following description and drawings.

BRIEF DESCRIPTION OF SEVERAL VIEWS OF THE DRAWINGS

FIG. 1A is an exemplary diagram illustrating a MIMO transceiver system, which may be utilized in connection with an embodiment of the invention.

FIG. 1B is an exemplary diagram illustrating a MIMO communication system, in accordance with an embodiment of the invention.

FIG. 2 is a flowchart illustrating exemplary steps for approximate ML detection in a MIMO receiver, in accordance with an embodiment of the invention.

DETAILED DESCRIPTION OF THE INVENTION

Certain embodiments of the invention relate to a method and system for approximate maximum likelihood (ML) detection in a multiple input multiple output (MIMO) receiver. In one aspect of the invention, a MIMO receiver may detect bits in a received signal vector by utilizing an approximate ML detection method. In various embodiments of the invention, approximate ML detection may enable the MIMO receiver to detect bits a received signal vector, which comprises three (3) or more constituent spatial stream signals, $x_i$, by computing a plurality of approximate log-likelihood ratio (or soft decision) values, where of the number of soft decision value computations increases linearly as a function of the number of constituent $x_i$ spatial stream signals.

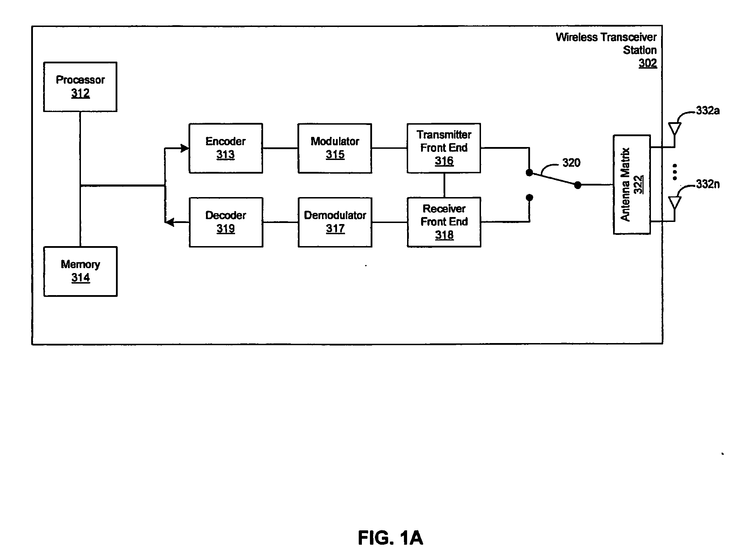

FIG. 1A is an exemplary diagram illustrating a MIMO transceiver system, which may be utilized in connection with an embodiment of the invention. Referring to FIG. 1A, there is shown a wireless transceiver station 302 and a plurality of antennas 332a...332n. The wireless transceiver station 302 is an exemplary wireless communication device, which may be utilized as a transmitter and/or receiver. The plurality of antennas 332a...332n may enable the wireless transceiver station 302 to transmit and/or receive signals, for example radio frequency (RF) signals, via a wireless communication medium. The wireless transceiver station 302 shown in FIG. 1A may also be depicted as comprising one or more transmitting antennas, which are coupled to the transmitter front end (FE) 316 and one or more receiving antennas, which may be coupled to the receiver front end (FE) 318 without loss of generality.

The exemplary wireless transceiver station comprises a processor 312, a memory 314, an encoder 313, a decoder 319, a modulator 315 a transmitter FE 316, a demodulator 317, a receiver FE 318, a transmit and receive (T/R) switch 320 and an antenna matrix 322. The antenna matrix 322 may enable selection of one or more of the antennas 332a...332n for transmitting and/or receiving signals at the wireless transceiver station 302. The T/R switch 320 may enable the antenna matrix 322 to be communicatively coupled to the transmitter FE 316 or receiver FE 318.

The transmitter FE 316 may enable the generation of signals, which may be transmitted via the selected antennas 332a...332n The encoder 313 may receive data from the processor 312 and/or memory 314 and generate encoded binary data. The encoded binary data may be generated by utilizing error correction coding, for example binary convolutional coding (BCC), and/or bit interleaving. The modulator 315 may receive encoded binary data from the encoder 313 and convert the encoded binary data to a data symbol representation based on one or more selected modulation types. The modulator 315 may generate one or more spatial streams to transmit the data symbols to the transmitter FE 316.

The receiver FE 318 may enable the processing of signals received via the selected antennas 332a...332n. The demodulator 317 may receive data symbols from the receiver FE 318 and enable the generation of a plurality of soft decision values based on one or more selected modulation types. The soft decision values may be sent to the decoder 319. The decoder 319 may utilize the soft decision values to generate decoded binary data. The decoded binary data may be sent to the processor 312 and/or memory 314.

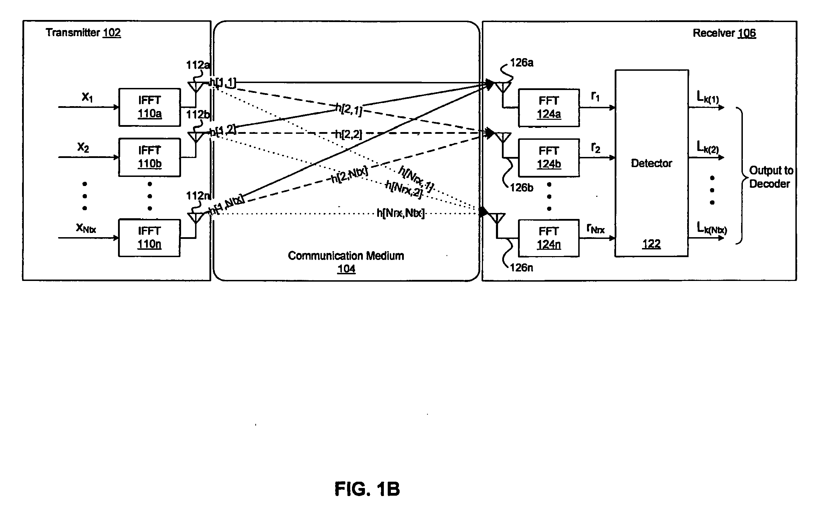

FIG. 1 B is an exemplary diagram illustrating a MIMO communication system, in accordance with an embodiment of the invention. Referring to FIG. 1 B, there is shown a MIMO transmitter 102, a MIMO receiver 106, and a communications medium 104. The communications medium 104 may represent a wireless communications medium, for example. The MIMO transmitter 102 may comprise a plurality of inverse fast Fourier transform (IFFT) blocks 110a, 110b,..., and 110n, and a plurality of antennas 112a, 112b,..., and 112n. The MIMO receiver 106 may comprise a plurality of antennas 126a, 126b,..., and 126n, a plurality of fast Fourier transform (FFT) blocks 124a, 124b,..., and 124n and a detector block 122.

In an exemplary embodiment of the invention, each of the plurality of IFFT blocks 110a, 110b,..., and 110n may receive a corresponding one of a plurality of Ntx spatial stream signals $x_1, x_2,...,$ and $x_{Ntx}$. Each of the spatial stream signals may be generated, for example, by a modulator block 315 such as the one shown in FIG. 1A, and/or other circuitry which is commonly present in transmitter and/or transceiver systems. Such circuitry may include, for example, parsing circuitry, which distributes bits from a single input bit stream among the plurality of spatial streams, and constellation mapper circuitry, which utilizes a constellation associated with a modulation type to convert groups of bits within a given spatial stream into one of a plurality of signal levels. Each of the IFFT blocks 110a, 110b,..., and 110n may convert each of the corresponding spatial stream signals from a frequency domain representation to a time domain representation. Each of the time domain versions of the signals $x_1, x_2,...,$ and $x_{Ntx}$ may be concurrently transmitted by a corresponding one of antennas 110a, 110b,..., and 110n. The plurality of concurrently transmitted signals may be represented as a column vector X.

Various embodiments of the invention may also be practiced when the transmitter 102 transmits signals by utilizing beamforming and/or space-time diversity coding. In such instance, the transmitter 102 may comprise a spatial mapping matrix. The spatial mapping matrix may receive a plurality of Nss spatial streams and output a plurality of Ntx transmit chain signals. Each of the transmit chain signals may be generated by computing a weighted sum from the plurality of spatial stream signals, where the weights may be determined by the spatial mapping matrix. Each of the IFFT blocks 110a, 110b,..., and 110n may convert each of the corresponding transmit chain signals from a frequency domain representation to a time domain representation. Each of the time domain version of the signals may be transmitted by a corresponding one of antennas 110a, 110b,..., and 110n. In such case, an effective channel estimate matrix for transmitted signals may be determined based on the product of the channel estimate matrix, which characterizes the communication medium, and the spatial mapping matrix.

Once again referring to FIG. 1 B, the antennas 126a, 126b,..., and 126n may receive signals, $r_1, r_2,...,$ and $r_{Nrx}$, respectively, which propagate via the communication medium 104. The transmitted signal vector X may be altered as it propagates through the communication medium 104. The altered signals may be received at the MIMO receiver as a received signal vector R. The alteration of the transmitted signals may be represented by channel estimates h[i,j]. As shown in FIG.1 B, the spatial stream signal $x_1$ which is transmitted by antenna 112a and received at antenna 126a may be altered based on a channel estimate h[1,1]. The spatial stream signal, $x_2$, which is transmitted by antenna 112b and received at antenna 126a may be altered based on a channel estimate h[1,2]. The spatial stream signal, $x_{Ntx}$, which is transmitted by antenna 112n and received at antenna 126a may be altered based on a channel estimate h[1,Ntx].

The spatial stream signal, $x_1$, which is transmitted by antenna 112a and received at antenna 126b may be altered based on a channel estimate h[2,1]. The spatial stream signal, $x_2$, which is transmitted by antenna 112b and received at antenna 126b may be altered based on a channel estimate h[2,2]. The spatial stream signal, $x_{Ntx}$, which is transmitted by antenna 112n and received at antenna 126b may be altered based on a channel estimate h[2,Ntx].

The spatial stream signal $x_1$ which is transmitted by antenna 112a and received at antenna 126n may be altered based on a channel estimate h[Nrx,1]. The spatial stream signal $x_2$ which is transmitted by antenna 112b and received at antenna 126n may be altered based on a channel estimate h[Nrx,2]. The spatial stream signal $x_{Ntx}$ which is transmitted by antenna 112n and received at antenna 126n may be altered based on a channel estimate h[Nrx,Ntx].

At the MIMO receiver 106, each of the FFT blocks 124a, 124b,..., and 124n may convert a corresponding received signal, $r_1, r_2,...,$ and $r_{Nrx}$, from a time domain representation to a frequency domain representation. The signals received by antennas 126a, 126b,..., and 126n may be represented by the following system of equations:

$$
\begin{aligned}
r_1 &= h[1,1]\cdot x_1 + h[1,2]\cdot x_2 + \cdots + h[1,\text{Ntx}]\cdot x_{\text{Ntx}} + n_1 \\
r_2 &= h[2,1]\cdot x_1 + h[2,2]\cdot x_2 + \cdots + h[2,\text{Ntx}]\cdot x_{\text{Ntx}} + n_2 \\
&\vdots \\
r_{\text{Nrx}} &= h[\text{Nrx},1]\cdot x_1 + h[\text{Nrx},2]\cdot x_2 + \cdots + h[\text{Nrx},\text{Ntx}]\cdot x_{\text{Ntx}} + n_{\text{Nrx}}
\end{aligned}
\qquad [8]
$$

The detector block 122 may enable the MIMO receiver 106 to generate a plurality of soft decision values $L_{k(1)}$, $L_{k(2)},...,$ and $L_{k(Ntx)}$. Each of the soft decision values $L_{k(i)}$ corresponds to a soft decision value for the $k^{th}$ bit in the $i^{th}$ spatial stream symbol. The bit corresponding to the soft decision value $L_{k(i)}$ may be represented by the notation $b_{k(i)}$. The set of soft decision values $L_{k(i)}$ may be output from the detector block 122 and received by a decoder, which may utilize the soft decision values to generate decoded bits.

The receiver 106 may comprise functionality not shown in FIG. 1B, which is commonly present in receiver and/or transceiver systems. Such circuitry may include, for example, decoder circuitry, which generates bit values based on soft decision values and interleaver circuitry, which merges bits from a plurality of spatial streams and/or received RF chains, into a single bit stream.

In various embodiments of the invention, the number of computed squared distance metric values may be reduced, in comparison to conventional ML detector systems, by decomposing the constellation vector $\hat{X}$ into individual constituent constellation points $\hat{x}_1, \hat{x}_2,...,$ and $\hat{x}_{Ntx}$. Each constellation point $\hat{x}_i$ comprises a set of candidate constellation point values selected from the constellation map for the MOD(i) modulation type utilized within the $i^{th}$ spatial stream. The reduction in squared distance metric computations may be the result of searching over each of the $\hat{x}_i$ constellations instead of searching over the joint constellation for $\hat{X}$.

As a result of the decomposition approach, as practiced in various embodiments of the invention, computation of soft decision values $L_{k(i)}$ may involve computing a plurality of squared distance values. The number of squared distance values computed for a given computed soft decision value $L_{k(i)}$ may be determined based on the number of constellation points in the constellation map for the MOD(i) modulation type. Consequently, in an exemplary embodiment of the invention, the task of computing soft decision values for each bit received via the received signal vector R may involve computing a number of squared distance values, $N_{comp}(\text{approx ML})$, as represented in the following equation:

$$
N_{\text{comp}}\left(\text{approx ML}\right) = \sum_{i=1}^{\text{Ntx}} 2^{\text{MOD}(i)} \qquad [9]
$$

In an exemplary embodiment of the invention in which Ntx=4 and 64-QAM is utilized for each spatial stream at the transmitter, the detector 122 at the MIMO receiver 106 may compute a number of squared distance values as shown in the following equation:

$$N_{comp}(ML) = 4 \cdot 2^6 = 256 \qquad [10]$$

In comparison to the number of computations represented in equation [7], equation [10] represents a 99.9985% reduction in the number of computations.

In various embodiments of the invention, decomposition of the constellation vector $\hat{X}$, for purposes of soft decision value computation, may utilize series of computed matrices, $W_i$, where the matrix $W_i$ may enable computation of soft decision values $L_{K(i)}$ associated with candidate constellation point values $\hat{x}_i$. In various embodiments of the invention, the matrix $W_i$ is not a unitary matrix. As such, the matrix product $W_i^H \times W_i \neq 1$, where I refers to an identity matrix and $w_i^H$ refers to the complex conjugate transposed, or Hermitian, version of $W_i$. In an exemplary embodiment of the invention:

$$W_i \times W_i^H = \begin{bmatrix} 1 & 0 & \cdots & 0 \\ 0 & 1 & dc & dc \\ \vdots & dc & 1 & dc \\ 0 & dc & dc & 1 \end{bmatrix} \qquad [11]$$

where "dc" refers to one or more "don't care" matrix element values. A don't care value refers to a matrix element value, which may or may not be equal to zero (0).

In various embodiments of the invention, the matrix $W_i$ may be computed by series of steps as described below. The first step comprises computing a matrix U as shown in the following equation:

$$U = \left(H^H \; H\right)^{-1} H^H \qquad [12]$$

where H represents a channel estimate matrix. The matrix U may be represented as comprising a plurality of row vectors $u_i$, where each vector $u_i$ represents a row from the matrix U. Consequently, the matrix U may be represented as shown in the following equation:

$$U = \begin{bmatrix} u_1 \\ u_2 \\ \vdots \\ u_{Nss} \end{bmatrix} \qquad [13]$$

The matrix H may be represented as comprising a plurality of column vectors $h_i$, where each vector $h_i$ represents a column in from the matrix H. Consequently, the matrix H may be represented as shown in the following equation:

$$H = \begin{bmatrix} h_1 & h_2 & \cdots & h_{Nss} \end{bmatrix} \qquad [14]$$

A matrix $H_{\bar{i}}$ may be defined as shown in the following equation:

$$H_{\bar{i}} = \begin{bmatrix} h_{i+1} \cdots h_{Nss}, & h_1 \cdots h_{i-1} \end{bmatrix} \qquad [15]$$

In an exemplary embodiment of the invention, for which Nss=4, the matrices $H_{\bar{i}}$ may be represented as shown in the

following equations:

$$H_{\bar{1}} = \begin{bmatrix} h_2 & h_3 & h_4 \end{bmatrix} \qquad [16a]$$

$$H_{\bar{2}} = \begin{bmatrix} h_3 & h_4 & h_1 \end{bmatrix} \qquad [16b]$$

$$H_{\bar{3}} = \begin{bmatrix} h_4 & h_1 & h_2 \end{bmatrix} \qquad [16c]$$

$$H_{\bar{4}} = \begin{bmatrix} h_1 & h_2 & h_3 \end{bmatrix} \qquad [16d]$$

For each value i=1, 2,..., Nss, a matrix $V_i$ may be computed as shown in the following equation:

$$V_i = \left( H_{\bar{i}}^{\,H} \, H_{\bar{i}} \right)^{-1} H_{\bar{i}}^{\,H} \qquad [17]$$

and a matrix $\tilde{W}_i$ may be computed as shown in the following equation:

$$\tilde{W}_i = \begin{bmatrix} u_i \\ V_i \end{bmatrix} \qquad [18]$$

Based on the matrix $\tilde{W}_i$, the matrix $W_i$ may be computed as shown in the following equation:

$$W_i = \left( I \bullet \left( \tilde{W}_i \, \tilde{W}_i^{\,H} \right) \right)^{-\frac{1}{2}} \tilde{W}_i \qquad [19]$$

Where the notation • represents the Hadamard product operator and the matrix I represents an identity matrix.

In various embodiments of the invention, the detector 122 may utilize the matrix $W_i$ to compute approximate log-likelihood ratios as follows:

$$L_{k(i)} = \frac{1}{\sigma^2} \left( \min_{\hat{x}_i | b_{k(i)}=0} - \min_{\hat{x}_i | b_{k(i)}=1} \right) \left\| W_i \, R - W_i \, H \, \hat{X} \right\|^2 \qquad [20]$$

where a vector $Y_i$ may be defined as $Y_i = W_i R$. An exemplary vector $Y_i$ may be represented as a column vector comprising a plurality of elements $y_{i,1}$, $y_{i,2}$,..., and $y_{i,Ntx}$.

In an exemplary embodiment of the invention in which the detector 122 computes soft decision values $L_{k(i)}$ based on the transformed received signal vector $Y_i$ where Ntx=4, various matrix products $W_i H$ may be represented as follows:

$$W_1 \ H = \begin{bmatrix} a_1 & 0 & 0 & 0 \\ b_1 & c_1 & 0 & 0 \\ d_1 & 0 & e_1 & 0 \\ f_1 & 0 & 0 & g_1 \end{bmatrix} \qquad [21a]$$

when the detector 122 computes soft decision values $L_{k(1)}$ based on the transformed received signal vector $Y_1$;

$$W_2 \ H = \begin{bmatrix} 0 & a_2 & 0 & 0 \\ 0 & b_2 & c_2 & 0 \\ 0 & d_2 & 0 & e_2 \\ g_2 & f_2 & 0 & 0 \end{bmatrix} \qquad [21b]$$

when the detector 122 computes soft decision values $L_{k(2)}$ based on the transformed received signal vector $Y_2$;

$$W_3 \ H = \begin{bmatrix} 0 & 0 & a_3 & 0 \\ 0 & 0 & b_3 & c_3 \\ e_3 & 0 & d_3 & 0 \\ 0 & g_3 & f_3 & 0 \end{bmatrix} \qquad [21c]$$

when the detector 122 computes soft decision values $L_{k(3)}$ based on the transformed received signal vector $Y_3$; and

$$W_4 \ H = \begin{bmatrix} 0 & 0 & 0 & a_4 \\ c_4 & 0 & 0 & b_4 \\ 0 & e_4 & 0 & d_4 \\ 0 & 0 & g_4 & f_4 \end{bmatrix} \qquad [21d]$$

when the detector 122 computes soft decision values $L_{k(4)}$ based on the transformed received signal vector $Y_4$. In equations [21], the matrix elements a, b, c, d, e, f and g may refer to complex variables. When the detector 122 computes soft decision values $L_{k(1)}$ based on transformed received signal vector $Y_1$, the matrix product $W_1$ H shown in equation [21 a] may be utilized. In this instance, the approximate log-likelihood ratio equation may be represented as follows:

$$L_{k(1)} = \frac{1}{\sigma^2} \left( \min_{\hat{x}_1 | b_{k(1)} = 0} - \min_{\hat{x}_1 | b_{k(1)} = 1} \right)$$

$$\left( \left| y_{1,1} - a_1 \cdot \hat{x}_1 \right|^2 + \left| y_{1,2} - b_1 \cdot \hat{x}_1 - c_1 \cdot \hat{x}_2 \right|^2 + \left| y_{1,3} - d_1 \cdot \hat{x}_1 - e_1 \cdot \hat{x}_3 \right|^2 + \left| y_{1,4} - f_1 \cdot \hat{x}_1 - g_1 \cdot \hat{x}_4 \right|^2 \right) \qquad [22]$$

In various embodiments of the invention, each of the candidate constellation point values $\hat{x}_j$ (for j≠i) may be determined by computing a sliced value. The sliced values for each estimated $\hat{x}_j$ (for j≠i) may be computed based on selected candidate constellation point values $\hat{x}_i$. Candidate constellation point values $\hat{x}_i$ may be selected from the constellation for the modulation type identified by MOD(i), which is utilized at the MIMO transmitter 102 to generate symbols for the $i^{th}$ spatial stream. In various embodiments of the invention, equation [22] may be represented as follows:

$$L_{k(1)} = \frac{1}{\sigma^2} \left( \min_{\hat{x}_1 | b_{k(1)} = 0} - \min_{\hat{x}_1 | b_{k(1)} = 1} \right)$$

$$\left( \begin{array}{c} \left| y_{1,1} - a_1 \cdot \hat{x}_1 \right|^2 + \left| y_{1,2} - b_1 \cdot \hat{x}_1 - S^{c_1}_{MOD(2)} \left( y_{1,2} - b_1 \cdot \hat{x}_1 \right) \right|^2 \\ + \left| y_{1,3} - d_1 \cdot \hat{x}_1 - S^{e_1}_{MOD(3)} \left( y_{1,3} - d_1 \cdot \hat{x}_1 \right) \right|^2 + \left| y_{1,4} - f_1 \cdot \hat{x}_1 - S^{g_1}_{MOD(4)} \left( y_{1,4} - f_1 \cdot \hat{x}_1 \right) \right|^2 \end{array} \right) \qquad \text{[23a]}$$

where the bracketed expression on the right hand side of equation [23a] is referred to as a squared distance metric value, SD, as shown in the following equation:

$$SD = \left( \begin{array}{c} \left| y_{1,1} - a_1 \cdot \hat{x}_1 \right|^2 + \left| y_{1,2} - b_1 \cdot \hat{x}_1 - S^{c_1}_{MOD(2)} \left( y_{1,2} - b_1 \cdot \hat{x}_1 \right) \right|^2 \\ + \left| y_{1,3} - d_1 \cdot \hat{x}_1 - S^{e_1}_{MOD(3)} \left( y_{1,3} - d_1 \cdot \hat{x}_1 \right) \right|^2 + \left| y_{1,4} - f_1 \cdot \hat{x}_1 - S^{g_1}_{MOD(4)} \left( y_{1,4} - f_1 \cdot \hat{x}_1 \right) \right|^2 \end{array} \right) \qquad \text{[23b]}$$

In equations [23], $S^m_{MOD(j)} \left( z\left( \hat{x}_i \right) \right)$ (where j≠i) refers to a sliced value for z, where z is represented as a function of $\hat{x}_i$.

Specifically $S^m_{MOD(j)}$ refers to the closest point to $z(\hat{x}_i)$ out of all the points in the constellation defined by MOD(j) scaled by m. Individual values for $z(\hat{x}_i)$ may be computed based on candidate constellation point values for $\hat{x}_i$, which may be selected from a constellation map for a modulation type identified by MOD(i). Consequently, there may be $2^{MOD(i)}$ computed $z(\hat{x}_i)$ values. However, sliced values for $z(x_i)$ may be selected from a constellation for a modulation type that is identified by MOD(j) (where j≠i). The sliced value for $z(\hat{x}_i)$ may be scaled (for example, multiplied) by m. In various embodiments of the invention, the selection of values for $\hat{x}_i$ from the MOD(i) constellation may be referred to as a "search" on the $\hat{x}_i$ dimension of the constellation vector $\hat{X}$. The computation of sliced values for $\hat{x}_j$, $S^m_{MOD(j)} \left( z\left( \hat{x}_i \right) \right)$ (where j≠i), may be referred to as "slicing" on dimensions $\hat{x}_j$ of the constellation vector $\hat{X}$.

Given the search values $\hat{x}_1$, the sliced values $\hat{x}_j$ (where j≠1) that are represented in equations [23] are represented as shown in the following equations:

$$c_1 \cdot \hat{x}_2 = S^{c_1}_{MOD(2)} \left( y_{1,2} - b_1 \cdot \hat{x}_1 \right) \qquad \text{[24a]}$$

$$e_1 \cdot \hat{x}_3 = S^{e_1}_{MOD(3)} \left( y_{1,3} - d_1 \cdot \hat{x}_1 \right) \qquad \text{[24b]}$$

$$g_1 \cdot \hat{x}_4 = S^{g_1}_{MOD(4)} \left( y_{1,4} - f_1 \cdot \hat{x}_1 \right) \qquad \text{[24c]}$$

Thus, where equation [22] represents the approximate log-likelihood ratio $L_{k(1)}$ as a function of candidate constellation point values $\hat{x}_1$, $\hat{x}_2$, $\hat{x}_3$, and $\hat{x}_4$, equation [23a] represents the approximate log-likelihood ratio $L_{k(1)}$ as a function of candidate constellation point values $\hat{x}_1$. In equations [23] each of the sliced values $\hat{x}_2$, $\hat{x}_3$, and $\hat{x}_4$, is represented as a function of the search values $\hat{x}_1$ as shown in equations [24].

Consequently, the soft decision values $L_{k(1)}$ may be computed by selecting constellation points from the MOD(1) constellation.

For each selected candidate constellation point value $\hat{x}_1$, a value for $c_1 \cdot \hat{x}_2$ may be computed as shown in equation [24a], a value for $e_1 \cdot \hat{x}_3$ may be computed as shown in equation [24b] and a value $g_1 \cdot \hat{x}_4$ may be computed as shown in equation [24c]. Based on the value $c_1 \cdot \hat{x}_2$ computed as shown in equation [24a], a scaled constellation map may be generated based on the constellation map for the MOD(2) modulation type. In an exemplary embodiment of the invention, the scaled constellation map is generated by scaling each constellation point in the MOD(2) constellation map by the variable $c_1$. A slicing operation in the $\hat{x}_2$ dimension may be performed when a constellation point is selected from the scaled constellation map for the MOD(2) modulation type based on the computed value $(y_{1,2} - b_1 \cdot \hat{x}_1)$.

In various embodiments of the invention, for example for square-QAM modulation types (for example 16-QAM, 64-QAM or 256-QAM) where the constellation points lie uniformly on a square grid, slicing is a low complexity operation that typically comprises rounding and limiting operations.

Based on the value $e_1 \cdot \hat{x}_3$ computed as shown in equation [24b], a constellation point may be selected from the scaled constellation map for the MOD(3) modulation type by performing a slicing operation. The selected constellation point may represent a sliced value for the $\hat{x}_3$ dimension.

Based on the value $g_1 \cdot \hat{x}_4$ computed as shown in equation [24c], a constellation point may be selected from the scaled constellation map for the MOD(4) modulation type by performing a slicing operation. The selected constellation point may represent a sliced value for the $\hat{x}_4$ dimension.

Based on each of the selected constellation point values in the search dimension, and corresponding sliced values, a squared distance metric value, SD, may be computed. Each squared distance metric value, SD, may be computed as shown in equation [23b].

After each of the SD values is computed for the MOD(1) constellation, the soft decision values $L_{k(1)}$ may be computed as shown in equation [23a]. In this regard, the number of squared distance metric value computations performed during the computation of the soft decision values $L_{k(1)}$ may be represented as $2^{MOD(1)}$.

When the detector 122 computes soft decision values $L_{k(2)}$ based on the transformed received signal vector $Y_2$, the matrix product $W_2H$ shown in equation [21 b] may be utilized. In this instance, the approximate log-likelihood ratio equation may be represented as follows:

$$L_{k(2)} = \frac{1}{\sigma^2} \left( \min_{\hat{x}_2 | b_{k(2)}=0} - \min_{\hat{x}_2 | b_{k(2)}=1} \right)$$
$$\left( \left| y_{2,1} - a_2 \cdot \hat{x}_2 \right|^2 + \left| y_{2,2} - b_2 \cdot \hat{x}_2 - c_2 \cdot \hat{x}_3 \right|^2 + \left| y_{2,3} - d_2 \cdot \hat{x}_2 - e_2 \cdot \hat{x}_4 \right|^2 + \left| y_{2,4} - f_2 \cdot \hat{x}_2 - g_2 \cdot \hat{x}_1 \right|^2 \right) \qquad [25]$$

By searching on the $\hat{x}_2$ dimension and slicing on the $\hat{x}_1$, $\hat{x}_3$, and $\hat{x}_4$ dimensions, equation [25] may be represented as follows:

$$L_{k(2)} = \frac{1}{\sigma^2} \left( \min_{\hat{x}_2 | b_{k(2)}=0} - \min_{\hat{x}_2 | b_{k(2)}=1} \right)$$
$$\left( \begin{array}{l} \left| y_{2,1} - a_2 \cdot \hat{x}_2 \right|^2 + \left| y_{2,2} - b_2 \cdot \hat{x}_2 - S_{MOD(3)}^{c_2} \left( y_{2,2} - b_2 \cdot \hat{x}_2 \right) \right|^2 \\ + \left| y_{2,3} - d_2 \cdot \hat{x}_2 - S_{MOD(4)}^{e_2} \left( y_{2,3} - d_2 \cdot \hat{x}_2 \right) \right|^2 + \left| y_{2,4} - f_2 \cdot \hat{x}_2 - S_{MOD(1)}^{g_2} \left( y_{2,4} - f_2 \cdot \hat{x}_2 \right) \right|^2 \end{array} \right) \qquad [26a]$$

where the bracketed expression on the right hand side of equation [26a] is referred to as a squared distance metric value, SD, as shown in the following equation:

$$SD = \left( \begin{array}{l} \left| y_{2,1} - a_2 \cdot \hat{x}_2 \right|^2 + \left| y_{2,2} - b_2 \cdot \hat{x}_2 - S_{MOD(3)}^{c_2} \left( y_{2,2} - b_2 \cdot \hat{x}_2 \right) \right|^2 \\ + \left| y_{2,3} - d_2 \cdot \hat{x}_2 - S_{MOD(4)}^{e_2} \left( y_{2,3} - d_2 \cdot \hat{x}_2 \right) \right|^2 + \left| y_{2,4} - f_2 \cdot \hat{x}_2 - S_{MOD(1)}^{g_2} \left( y_{2,4} - f_2 \cdot \hat{x}_2 \right) \right|^2 \end{array} \right) \qquad [26b]$$

Given the search values $\hat{x}_2$, the sliced values $\hat{x}_j$ (where j≠2) that are represented in equations [26] are represented as shown in the following equations:

$$c_2 \cdot \hat{x}_3 = S^{c_2}_{MOD(3)}\left(y_{2,2} - b_2 \cdot \hat{x}_2\right) \qquad \text{[27a]}$$

$$e_2 \cdot \hat{x}_4 = S^{e_2}_{MOD(4)}\left(y_{2,3} - d_2 \cdot \hat{x}_2\right) \qquad \text{[27b]}$$

$$g_2 \cdot \hat{x}_1 = S^{g_2}_{MOD(1)}\left(y_{2,4} - f_2 \cdot \hat{x}_2\right) \qquad \text{[27c]}$$

Thus, where equation [25] represents the approximate log-likelihood ratio $L_{k(2)}$ as a function of candidate constellation point values $\hat{x}_1$, $\hat{x}_2$, $\hat{x}_3$, and $\hat{x}_4$, equation [26a] represents the approximate log-likelihood ratio $L_{k(2)}$ as a function of the candidate constellation point values $\hat{x}_2$. In equations [26] each of the sliced values $\hat{x}_1$, $\hat{x}_3$, and $\hat{x}_4$, is represented as a function of the search values $\hat{x}_2$ as shown in equations [27].

Consequently, the soft decision values $L_{k(2)}$ may be computed by selecting constellation points from the MOD(2) constellation.

For each selected candidate constellation point value $\hat{x}_2$, a value for $c_2 \cdot \hat{x}_3$ may be computed as shown in equation [27a], a value for $e_2 \cdot \hat{x}_4$ may be computed as shown in equation [27b] and a value $g_2 \cdot \hat{x}_1$ may be computed as shown in equation [27c]. Based on the value $c_2 \cdot \hat{x}_3$ computed as shown equation [27a], a constellation point may be selected from the scaled constellation map for the MOD(3) modulation type by performing a slicing operation. The scaled constellation map may be generated by scaling each of the constellation points in the constellation map for the MOD(3) modulation type by the variable $c_2$. The selected constellation point may represent a sliced value for the $\hat{x}_3$ dimension.

Based on the value $e_2 \cdot \hat{x}_4$ computed as shown in equation [27b], a constellation point may be selected from the scaled constellation map for the MOD(4) modulation type by performing a slicing operation. The selected constellation point may represent a sliced value for the $\hat{x}_4$ dimension.

Based on the value $g_2 \cdot \hat{x}1$ computed as shown in equation [27c], a constellation point may be selected from the scaled constellation map for the MOD(1) modulation type by performing a slicing operation. The selected constellation point may represent a sliced value for the $\hat{x}_1$ dimension.

Based on each of the selected constellation point values in the search dimension, and corresponding sliced values, a squared distance metric value, SD, may be computed. Each squared distance metric value, SD, may be computed as shown in equation [26b].

After each of the SD values is computed for the MOD(2) constellation, the soft decision values $L_{k(2)}$ may be computed as shown in equation [26a]. In this regard, the number of squared distance metric value computations performed during the computation of the soft decision values $L_{k(2)}$ may be represented as $2^{MOD(2)}$.

When the detector 122 computes soft decision values $L_{k(3)}$ based on the transformed received signal $Y_3$, the matrix product $W_3 H$ shown in equation [21 c] may be utilized. In this instance, the approximate log-likelihood ratio equation may be represented as follows:

$$L_{k(3)} = \frac{1}{\sigma^2}\left(\min_{\hat{x}_3|b_{k(3)}=0} - \min_{\hat{x}_3|b_{k(3)}=1}\right)$$
$$\left(\left|y_{3,1} - a_3 \cdot \hat{x}_3\right|^2 + \left|y_{3,2} - b_3 \cdot \hat{x}_3 - c_3 \cdot \hat{x}_4\right|^2 + \left|y_{3,3} - d_3 \cdot \hat{x}_3 - e_3 \cdot \hat{x}_1\right|^2 + \left|y_{3,4} - f_3 \cdot \hat{x}_3 - g_3 \cdot \hat{x}_2\right|^2\right) \qquad \text{[28]}$$

By searching on the $\hat{x}_3$ dimension and slicing on the $\hat{x}_1$, $\hat{x}_2$, and $\hat{x}_4$ dimensions, equation [28] may be represented as follows:

$$L_{k(3)} = \frac{1}{\sigma^2} \left( \min_{\hat{x}_3 | b_{k(3)}=0} - \min_{\hat{x}_3 | b_{k(3)}=1} \right)$$

$$\left( \left| y_{3,1} - a_3 \cdot \hat{x}_3 \right|^2 + \left| y_{3,2} - b_3 \cdot \hat{x}_3 - S_{MOD(4)}^{c_3} \left( y_{3,2} - b_3 \cdot \hat{x}_3 \right) \right|^2 \right.$$
$$\left. + \left| y_{3,3} - d_3 \cdot \hat{x}_3 - S_{MOD(1)}^{e_3} \left( y_{3,3} - d_3 \cdot \hat{x}_3 \right) \right|^2 + \left| y_{3,4} - f_3 \cdot \hat{x}_3 - S_{MOD(2)}^{g_3} \left( y_{3,4} - f_3 \cdot \hat{x}_3 \right) \right|^2 \right) \qquad \text{[29a]}$$

where the bracketed expression on the right hand side of equation [29a] is referred to as a squared distance metric value, SD, as shown in the following equation:

$$SD = \left( \left| y_{3,1} - a_3 \cdot \hat{x}_3 \right|^2 + \left| y_{3,2} - b_3 \cdot \hat{x}_3 - S_{MOD(4)}^{c_3} \left( y_{3,2} - b_3 \cdot \hat{x}_3 \right) \right|^2 \right.$$
$$\left. + \left| y_{3,3} - d_3 \cdot \hat{x}_3 - S_{MOD(1)}^{e_3} \left( y_{3,3} - d_3 \cdot \hat{x}_3 \right) \right|^2 + \left| y_{3,4} - f_3 \cdot \hat{x}_3 - S_{MOD(2)}^{g_3} \left( y_{3,4} - f_3 \cdot \hat{x}_3 \right) \right|^2 \right) \qquad \text{[29b]}$$

Given the search values $\hat{x}_3$, the sliced values $\hat{x}_j$ (where $j \neq 3$) that are represented in equations [29] are as follows:

$$c_3 \cdot \hat{x}_4 = S_{MOD(4)}^{c_3} \left( y_{3,2} - b_3 \cdot \hat{x}_3 \right) \qquad \text{[30a]}$$

$$e_3 \cdot \hat{x}_1 = S_{MOD(1)}^{e_3} \left( y_{3,3} - d_3 \cdot \hat{x}_3 \right) \qquad \text{[30b]}$$

$$g_3 \cdot \hat{x}_2 = S_{MOD(2)}^{g_3} \left( y_{3,4} - f_3 \cdot \hat{x}_3 \right) \qquad \text{[30c]}$$

Thus, where equation [28] represents the approximate log-likelihood ratio $L_{k(3)}$ as a function of candidate constellation point values $\hat{x}_1$, $\hat{x}_2$, $\hat{x}_3$, and $\hat{x}_4$, equation [29a] represents the approximate log-likelihood ratio $L_{k(3)}$ as a function of the candidate constellation point values $\hat{x}_3$. In equations [29] each of the sliced values $\hat{x}_1$, $\hat{x}_2$, and $\hat{x}_4$, is represented as a function of the search values $\hat{x}_3$ as shown in equations [30].

Consequently, the soft decision values $L_{k(3)}$ may be computed by selecting constellation points from the MOD(3) constellation.

For each selected candidate constellation point value $\hat{x}_3$, a value for $c_3 \cdot \hat{x}_4$ may be computed as shown in equation [30a], a value for $e_3 \cdot \hat{x}_1$ may be computed as shown in equation [30b] and a value $g_3 \cdot \hat{x}_2$ may be computed as shown in equation [30c]. Based on the value $\hat{x}_4$ computed according to equation [30a], a constellation point may be selected from the scaled constellation map for the MOD(4) modulation type by performing a slicing operation. The scaled constellation map may be generated by scaling each of the constellation points in the constellation map for the MOD (4) modulation type by the variable $c_3$. The selected constellation point may represent a sliced value for the $\hat{x}_4$ dimension.

Based on the value $e_3 \cdot \hat{x}_1$ computed as shown in equation [30b], a constellation point may be selected from the scaled constellation map for the MOD(1) modulation type by performing a slicing operation. The selected constellation point may represent a sliced value for the $\hat{x}_1$ dimension.

Based on the value $g_3 \cdot \hat{x}_2$ computed as shown in equation [30c], a constellation point may be selected from the scaled constellation map for the MOD(2) modulation type by performing a slicing operation. The selected constellation point may represent a sliced value for the $\hat{x}_2$ dimension.

Based on each of the selected constellation point values in the search dimension, and corresponding sliced values, a squared distance metric value, SD, may be computed. Each squared distance metric value, SD, may be computed as shown in equation [29b].

After each of the SD values is computed for the MOD(3) constellation, the soft decision values $L_{k(3)}$ may be computed as shown in equation [29a]. In this regard, the number of squared distance metric value computations performed during the computation of the soft decision values $L_{k(3)}$ may be represented as $2^{MOD(3)}$.

When the detector 122 computes soft decision values $L_{k(4)}$ based on the transformed received signal vector $Y_4$, the matrix product $W_4 H$ shown in equation [30d] may be utilized. In this instance, the approximate log-likelihood ratio equation may be represented as follows:

$$L_{k(4)} = \frac{1}{\sigma^2}\left(\min_{\hat{x}_4|b_{k(4)}=0} - \min_{\hat{x}_4|b_{k(4)}=1}\right) \qquad [31]$$
$$\left(\left|y_{4,1}-a_4\cdot\hat{x}_4\right|^2 + \left|y_{4,2}-b_4\cdot\hat{x}_4-c_4\cdot\hat{x}_1\right|^2 + \left|y_{4,3}-d_4\cdot\hat{x}_4-e_4\cdot\hat{x}_2\right|^2 + \left|y_{4,4}-f_4\cdot\hat{x}_4-g_4\cdot\hat{x}_3\right|^2\right)$$

By searching on the $\hat{x}_4$ dimension and slicing on the $\hat{x}_1$, $\hat{x}_2$ and $\hat{x}_3$ dimensions, equation [31] may be represented as follows:

$$L_{k(4)} = \frac{1}{\sigma^2}\left(\min_{\hat{x}_4|b_{k(4)}=0} - \min_{\hat{x}_4|b_{k(4)}=1}\right)$$
$$\left(\begin{array}{l}\left|y_{4,1}-a_4\cdot\hat{x}_4\right|^2 + \left|y_{4,2}-b_4\cdot\hat{x}_4-S_{MOD(1)}^{c_4}\left(y_{4,2}-b_4\cdot\hat{x}_4\right)\right|^2 \\ +\left|y_{4,3}-d_4\cdot\hat{x}_4-S_{MOD(2)}^{e_4}\left(y_{4,3}-d_4\cdot\hat{x}_4\right)\right|^2 + \left|y_{4,4}-f_4\cdot\hat{x}_4-S_{MOD(3)}^{g_4}\left(y_{4,4}-f_4\cdot\hat{x}_4\right)\right|^2\end{array}\right) \qquad [32a]$$

where the bracketed expression on the right hand side of equation [32a] is referred to as a squared distance metric value, SD, as shown in the following equation:

$$SD = \left(\begin{array}{l}\left|y_{4,1}-a_4\cdot\hat{x}_4\right|^2 + \left|y_{4,2}-b_4\cdot\hat{x}_4-S_{MOD(1)}^{c_4}\left(y_{4,2}-b_4\cdot\hat{x}_4\right)\right|^2 \\ +\left|y_{4,3}-d_4\cdot\hat{x}_4-S_{MOD(2)}^{e_4}\left(y_{4,3}-d_4\cdot\hat{x}_4\right)\right|^2 + \left|y_{4,4}-f_4\cdot\hat{x}_4-S_{MOD(3)}^{g_4}\left(y_{4,4}-f_4\cdot\hat{x}_4\right)\right|^2\end{array}\right) \qquad [32b]$$

Given the search values $\hat{x}_4$, the sliced values $\hat{x}_j$ (where j≠4) that are represented in equations [32] are represented as shown in the following equations:

$$c_4\cdot\hat{x}_1 = S_{MOD(1)}^{c_4}\left(y_{4,2}-b_4\cdot\hat{x}_4\right) \qquad [33a]$$

$$e_4\cdot\hat{x}_2 = S_{MOD(2)}^{e_4}\left(y_{4,3}-d_4\cdot\hat{x}_4\right) \qquad [33b]$$

$$g_4\cdot\hat{x}_3 = S_{MOD(3)}^{g_4}\left(y_{4,4}-f_4\cdot\hat{x}_4\right) \qquad [33c]$$

Thus, where equation [31] represents the approximate log-likelihood ratio $L_{k(4)}$ as a function of candidate constellation

point values $\hat{x}_1$, $\hat{x}_2$, $\hat{x}_3$, and $\hat{x}_4$, equation [32a] represents the approximate log-likelihood ratio $L_{k(4)}$ as a function of the candidate constellation point values $\hat{x}_4$. In equations [32] each of the sliced values $\hat{x}_1$, $\hat{x}_2$, and $\hat{x}_3$, is represented as a function of the search values $\hat{x}_4$ as shown in equations [33].

Consequently, the soft decision values $L_{k(4)}$ may be computed by selecting constellation points from the MOD(4) constellation.

For each selected candidate constellation point value $\hat{x}_4$, a value for $c_4 \cdot \hat{x}_1$ may be computed according to equation [33a], a value for $e_4 \cdot \hat{x}_2$ may be computed according to equation [33b] and a value $g_4 \cdot \hat{x}_3$ may be computed according to equation [33c]. Based on the value $c_4 \cdot \hat{x}_1$ computed as shown in equation [30a], a constellation point may be selected from the scaled constellation map for the MOD(1) modulation type by performing a slicing operation. The selected constellation point may represent a sliced value for the $\hat{x}_1$ dimension.

Based on the value $e_4 \cdot \hat{x}_2$ computed as shown in equation [33b], a constellation point may be selected from the scaled constellation map for the MOD(2) modulation type by performing a slicing operation. The selected constellation point may represent a sliced value for the $\hat{x}_2$ dimension.

Based on the value $g_4 \cdot \hat{x}_3$ computed as shown in equation [33c], a constellation point may be selected from the scaled constellation map of a MOD(3) modulation type by performing a slicing operation. The selected constellation point may represent a sliced value for the $\hat{x}_3$ dimension.

Based on each of the selected constellation point values in the search dimension, and corresponding sliced values, a squared distance metric value, SD, may be computed. Each squared distance metric value, SD, may be computed as shown in equation [32b].

After each of the SD values is computed for the MOD(4) constellation, the soft decision values $L_{k(4)}$ may be computed as shown in equation [32a]. In this regard, the number of squared distance metric value computations performed during the computation of the soft decision values $L_{k(4)}$ may be represented as $2^{MOD(4)}$.

In the exemplary embodiment of the invention presented above, the soft decision values computed based on the received signal vector R may be approximated by the set of computed soft decision values $L_{k(1)}$, $L_{k(2)}$, $L_{k(3)}$, and $L_{k(4)}$ computed as shown in equations [23a], [26a], [29a] and [32a] respectively. The set of computed soft decision values $L_{k(1)}$, $L_{k(2)}$, $L_{k(3)}$, and $L_{k(4)}$ may be sent to a decoder, which may utilize the set of computed soft decision values to generate decoded bits.

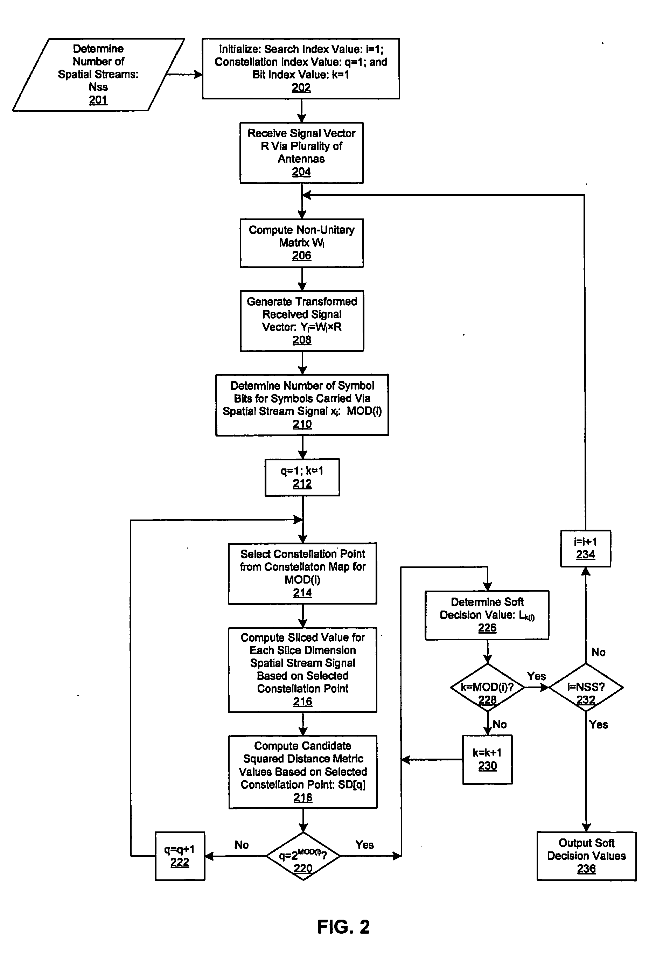

FIG. 2 is a flowchart illustrating exemplary steps for approximate ML detection in a MIMO receiver, in accordance with an embodiment of the invention. Referring to FIG. 2, in step 201, the number of spatial streams, Nss, carried by the received signal vector R may be determined. The number of spatial streams may be communicated to the MIMO receiver at an earlier point in time. For example, the number of spatial streams may be communicated to the MIMO receiver within the header of a protocol data unit (PDU) received from the MIMO transmitter. In an exemplary embodiment of the invention, the number of spatial streams is equal to the number of transmitting antennas at the transmitting station, which transmitted the signals that were received at the MIMO receiver. In step 202, exemplary index values may be initialized to initialization values. In step 202, the initialization value for each index is equal to one (1). The index values shown in step 202 comprise a search dimension index value, i, a constellation point index value, q, and a bit index value, k. The search dimension index value, i, may be utilized to indicate the search dimension. The constellation point index value, q, may be utilized to identify constellation points within a constellation map for the search dimension. The bit index value, k, may be utilized to identify a bit position in the search dimension for which a soft decision value is being computed.

In step 204, the MIMO receiver may receive a signal vector, R, via a plurality of receiving antennas. In step 206, a non-unitary matrix, $W_i$ may be computed. The matrix $W_i$ may be utilized as shown, for example, in equations [30]. In step 208, the matrix product $Y_i = W_i R$ may be computed. In step 210, the number of symbol bits for symbols carried by spatial stream signal signal $x_i$ (the search dimension), MOD(i), may be determined. MOD(i) may identify a modulation type. The modulation type may correspond to a constellation map, which comprises a plurality of constellation points. In step 212, the constellation point index, q, and the bit index, k, may be reinitialized. In step 212, each index may be initialized to a value one (1), for example.

In step 214, a constellation point may be selected from the constellation map identified by MOD(i). The selected constellation point may represent a current candidate constellation point value, $\hat{x}_i$, in the search dimension. In step 216, sliced values may be computed for spatial stream signals in each slice dimension. The sliced values may be computed based on the value of the currently selected constellation point. The sliced values may be computed as shown in equations [23], for example. In step 218, squared distance metric values, SD[q], may be computed based on the currently selected constellation point. The squared distance metric values may be computed as shown in equation [23b], for example. The squared distance metric values computed for the currently selected constellation point may be stored as the $q^{th}$ entry in the vector SD[q]. Step 220 may determine whether the last constellation point in the current constellation map has been selected. In instances, at step 220, in which there are remaining constellation points to be selected, in step 222, the constellation index value may be incremented, for example by one (1). Step 214 may follow step 222.

In instances, at step 220, in which there are no remaining constellation points to be selected, in step 226, a soft decision value may be determined for the $k^{th}$ bit in the search dimension spatial stream signal. The soft decision

values, $L_{k(i)}$, may be computed as shown in equation [23a], for example. The soft decision values $L_{1(i)}$, $L_{2(i)}$,..., and $L_{MOD(i),(i)}$ may be selected based on the set of computed squared distance metric values SD[1], SD[2],..., and SD[$2^{MOD(i)}$]. Step 228 may determine whether there are any remaining bits for which soft decision values may be computed for the search dimension spatial stream. In instances, at step 228, in which there are remaining bits for which soft decision values are to be computed for the search dimension spatial stream, in step 230, the bit index value, k, may be incremented, for example by one (1). Step 226 may follow step 230.

In instances, at step 228, in which there are no remaining bits to be computed for the search dimension spatial stream, step 232 may determine whether there are any remaining spatial streams for which soft decision values may be computed. In instances, at step 232, in which there are remaining spatial streams for which soft decision values may be computed, in step 234, the search index value, i, may be incremented, for example by (1). Step 206 may follow step 234.

In instances, at step 232, in which there are no remaining spatial streams for which soft decision values are to be computed, in step 236, the computed soft decisions values $L_{k(i)}$ may be output.

Various embodiments of the invention may be practiced with MIMO systems comprising MIMO transmitters, which concurrently transmit signals based on three (3) or more spatial stream signals, $x_1$, $x_2$, ..., and $x_{Nss}$. In various embodiments of the invention, the detector 122 may detect bits based on received signals vectors, R, which comprise three (3) or more concurrently received spatial stream signals. In various embodiments of the invention, the detector 122 may not be limited to performing the detection task based on log-likelihood computation. Various embodiments of the invention may be practiced in systems that utilize likelihood ratios and/or other computational methods, which enable the computational complexity of detecting bits (from received signal vectors comprising three (3) or more concurrently received spatial stream signals) to increase linearly with an increasing number of concurrently received spatial stream signals.

Various embodiments of the invention may also be practiced when one or more of the noise elements $n_i$ in the received signal vector R (as shown in equation [1], for example) is not represented as an independent and identically distributed (IID) complex Gaussian random variable. In such instances, the noise element(s) may be transformed such that the transformed noise element representation is represented as an IID complex Gaussian random variable. In an exemplary embodiment of the invention, the transformation may be achieved by utilizing a whitening filter.

Another embodiment of the invention may provide a computer readable medium having stored thereon, a computer program having at least one code section executable by a computer, thereby causing the computer to perform steps as described herein for approximate maximum likelihood (ML) detection in a multiple input multiple output (MIMO) receiver.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

**1.** A system for communicating information in a wireless communication system, the system comprising:

one or more circuits that enable concurrent reception of three (3) or more spatial stream signals via a plurality of antennas;
said one or more circuits enable determination of a plurality of candidate constellation point values for a selected one of said concurrently received three or more spatial stream signals;

said one or more circuits enable determination of a plurality of sliced constellation point values for each remaining one of said concurrently received three or more spatial stream signals based on said determined plurality of candidate constellation point values; and

said one or more circuits enable computation of soft decision values for at least a portion of a plurality of bits detected via said concurrently received three or more spatial stream signals based on said determined plurality of candidate constellation point values and said plurality of sliced constellation point values.

2. The system according to claim 1, wherein said one or more circuits enable determination of a number of said plurality of candidate constellation point values based on a modulation type utilized in connection with said selected one or said concurrently received three or more spatial stream signals.

3. The system according to claim 2, wherein each of said plurality of candidate constellation point values corresponds to a constellation point in a constellation map, said constellation map being determined based on said modulation type.

4. The system according to claim 2, wherein said one or more circuits enable determination of a number of bits for said computing of said soft decision values from said selected one of said concurrently received three or more spatial stream signals based on said modulation type.

5. The system according to claim 4, wherein said one or more circuits enable computation of a first minimum squared distance metric value for a selected one of said number of bits when a candidate value of said selected one of said number of bits is equal to zero (0), and computation of a second minimum squared distance metric value for said selected one of said number of bits when a candidate value of said selected one of said number of bits is equal to one (1).

6. The system according to claim 5, wherein said one or more circuits enable computation of a soft decision value based on said first minimum squared distance metric value and said second minimum squared distance metric value.

7. The system according to claim 6, wherein said one or more circuits enable computation of said soft decision value for each one of said determined number of bits.

8. The system according to claim 1, wherein said one or more circuits enable selection of a subsequent one of said concurrently received three or more spatial stream signals.

9. The system according to claim 8, wherein said one or more circuits enable computation of subsequent soft decision values for a subsequent at least a portion of said plurality of bits received via said concurrently received three or more spatial stream signals based on said selected subsequent one of said concurrently received three or more spatial stream signals.

10. The system according to claim 1, wherein each of said plurality of sliced constellation point values corresponds to one of said concurrently received three or more spatial stream signals.

11. The system according to claim 10, wherein said one or more circuits enable determination of said each of said plurality of sliced constellation point values based on a modulation type utilized in connection with said corresponding one of said concurrently received three or more spatial stream signals.

12. The system according to claim 11, wherein said determined each of said plurality of sliced constellation point values corresponds to a constellation point in a constellation map, said constellation map being determined based on said modulation type.

13. A method for communicating information in a wireless communication system, the method comprising:

concurrently receiving three (3) or more spatial stream signals via a plurality of antennas;
determining a plurality of candidate constellation point values for a selected one of said concurrently received three or more spatial stream signals;
determining a plurality of sliced constellation point values for each remaining one of said concurrently received three or more spatial stream signals based on said determined plurality of candidate constellation point values; and

computing soft decision values for at least a portion of a plurality of bits received via said concurrently received three or more spatial stream signals based on said determined plurality of candidate constellation point values and said plurality of sliced constellation point values.

14. The method according to claim 13, comprising determining a number of said plurality of candidate constellation point values based on a modulation type utilized in connection with said selected one or said concurrently received three or more spatial stream signals.

15. The method according to claim 14, wherein each of said plurality of candidate constellation point values corresponds to a constellation point in a constellation map, said constellation map being determined based on said modulation type.

FIG. 1A

**FIG. 1B**

Determine
Number of
Spatial Streams:
Nss
201

Initialize: Search Index Value: i=1;
Constellation Index Value: q=1; and
Bit Index Value: k=1
202

Receive Signal Vector
R Via Plurality of
Antennas
204

Compute Non-Unitary
Matrix $W_i$
206

Generate Transformed
Received Signal
Vector: $Y_i=W_i \times R$
208

Determine Number of Symbol
Bits for Symbols Carried Via
Spatial Stream Signal $x_i$: MOD(i)
210

q=1; k=1
212

Select Constellation Point
from Constellaton Map for
MOD(i)
214

Compute Sliced Value for
Each Slice Dimension
Spatial Stream Signal
Based on Selected
Constellation Point
216

Compute Candidate
Squared Distance Metric
Values Based on Selected
Constellation Point: SD[q]
218

q=q+1
222

No

$q=2^{MOD(i)}$?
220

Yes

Determine Soft
Decision Value: $L_{k(i)}$
226

k=MOD(i)?
228

Yes

No

i=NSS?
232

k=k+1
230

i=i+1
234

No

Yes

Output Soft
Decision Values
236

**FIG. 2**

22

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 60971970 B